# FASCICULE DE BREVET EUROPEEN

(11) **EP 4 270 337 B1**
(45) Date de publication et mention de la délivrance du brevet: **27.11.2024**
(21) Numéro de dépôt: 23169303.7
(22) Date de dépôt: 21.04.2023
(51) Int. Cl.: G07C 9/25, G06F 1/16, G06Q 50/26

(54) **TABLETTE D'ACQUISITION ET/OU DE CONTRÔLE DE DONNÉES DOCUMENTAIRES**
TABLETT ZUR ERFASSUNG UND/ODER STEUERUNG VON DOKUMENTDATEN
TABLET FOR ACQUIRING AND/OR CHECKING DOCUMENT DATA

(30) Priorité: 26.04.2022 FR 2203861
(43) Date de publication de la demande: 01.11.2023
(73) Titulaire: Getlink S.E., 75008 Paris (FR)
(72) Inventeur: JUIN, Philippe, 75012 PARIS (FR); MORATO, Jean-Christophe, 94350 VILLIERS SUR MARNE (FR)
(74) Mandataire: Cabinet Beau de Loménie

(56) Documents cités:
- EP-A1- 3 944 204
- FR-A1- 2 968 788
- JP-A- H05 207 245
- US-A1- 2021 133 404

## Description

### Domaine Technique

La présente invention concerne le domaine des installations ou dispositifs de contrôle des données documentaires, soit à bord d'un véhicule soit hors d'un véhicule, par exemple à l'intérieur d'un bâtiment, notamment lors d'un passage de frontière.

### Technique antérieure

Le but d'une telle installation ou dispositif est de pouvoir collecter, lorsque cela aura été rendu obligatoire pour le passage d'une frontière, des informations en lien avec les documents d'identité, telles que la biométrie faciale ou les empreintes digitales, ainsi que des informations de franchissement de la frontière, puis de les transmettre aux services de l'Etat afin qu'ils vérifient ces informations et leur conformité avec les documents d'identité du ou des passagers souhaitant franchir la frontière. Le ou les passagers peuvent notamment être installés à bord d'un véhicule.

Une telle installation permettra alors de faire réaliser des opérations de préenregistrement par les passagers eux-mêmes, en amont du passage de la frontière, afin de diminuer le temps passé par les gardes-frontières dans les opérations de contrôle. En l'absence de telles installations, ces opérations devront être réalisées physiquement par des gardes-frontière, ce qui ralentira le flux des passagers.

Actuellement, les agents procèdent à un contrôle d'identité du ou des passagers du véhicule sur la base des pièces d'identité fournies par le ou les passagers. Ils réalisent également, le cas échéant, un contrôle du véhicule sur la base des documents d'identité du véhicule, telle que la carte grise.

Lors de cette opération, un agent doit être présent physiquement pour consulter les différents documents présentés par le ou les passagers, interroger les bases de données et réaliser les procédures de contrôle appropriées.

Lorsque le véhicule est un poids-lourd transportant de la marchandise, l'agent doit également vérifier les documents administratifs afférents à la marchandise transportée.

Ces démarches sont chronophages et mobilisent des ressources humaines. En outre, le protocole actuel impose à l'agent d'être en contact avec les passagers du véhicule.

Le document EP 3 944 204 décrit une installation permettant aux passagers d'effectuer eux-mêmes les démarches d'acquisition et de contrôle de leurs documents, tout en restant dans leur véhicule, grâce notamment à une tablette mise à disposition des passagers à une borne accessible depuis l'intérieur du véhicule. Une telle installation, bien que parfaitement satisfaisante, nécessite néanmoins de nombreuses manipulations de la part des passagers, ce qui peut entraîner une durée d'utilisation rallongée, notamment pour les passagers n'ayant pas l'habitude de telles installations.

Les documents FR2968788 et US 2021/0133404 A1 décrivent un dispositif d'acquisition de données documentaires similaire.

### Exposé de l'invention

La présente invention vise à résoudre les différents problèmes techniques énoncés précédemment. En particulier, la présente invention vise à proposer un dispositif permettant l'acquisition et/ou le contrôle de données documentaires de manière plus rapide, simple et intuitive. Plus précisément, la présente invention vise à proposer un dispositif permettant de faciliter et d'accélérer les étapes d'acquisition et/ou de contrôle des données documentaires par les passagers.

Ainsi, selon la présente invention, il est proposé une tablette d'acquisition et/ou de contrôle de données documentaires, notamment à bord d'un véhicule ou à l'intérieur d'un bâtiment, selon les caractéristiques de la revendication 1.

Ainsi, la tablette selon la présente invention est configurée pour accélérer l'acquisition et/ou le contrôle des données grâce à son module de lecture à deux lecteurs en combinaison avec le support. En particulier, en positionnant le document à lire sur le support, la tablette selon la présente invention est configurée pour effectuer la lecture de deux types d'informations différentes comprises dans ledit document, par exemple simultanément, sans nécessiter d'action de la part du passager entre les deux lectures d'informations. Dit autrement, la tablette est configurée pour effectuer, depuis un seul et même support, deux lectures d'informations différentes comprises dans un document positionné sur ledit support.

En particulier, le module de lecture de données documentaires est configuré pour acquérir différentes données d'un document disposé, ou positionné ou posé, immobile sur le support, avec les deux lecteurs différents. Dit autrement, le module de lecture est configuré pour lire, à la fois, des données différentes d'un document qui est posé immobile sur le support.

Préférentiellement, le module de lecture comporte un lecteur optique, par exemple pour lire une piste MRZ ou un code-barres, et un lecteur RFID, par exemple pour lire une puce électronique.

De tels lecteurs correspondent aux données pouvant être incluses dans un passeport. Ainsi, la tablette selon la présente invention est configurée pour lire à la fois la piste MRZ et la puce électronique du passeport, lorsque celui-ci est positionné sur le support, sans nécessiter d'intervention du passager entre les deux lectures.

Préférentiellement, le lecteur RFID est monté du même côté que l'écran de la tablette, et le lecteur optique est monté du côté opposé à l'écran de la tablette.

Le positionnement du lecteur optique sur la face arrière de la tablette permet à l'utilisateur de visualiser la partie lue par le lecteur, la bande MRZ, au moment de placer son document sur le support. En effet, le lecteur optique est ainsi configuré pour lire ce qui est orienté vers la face arrière de la tablette, c'est-à-dire ce qui est orienté vers l'utilisateur de la tablette faisant face à la face avant de celle-ci.

Préférentiellement, le support et le module de lecture de données documentaires sont positionnés au-dessus de l'écran, de préférence sur une partie supérieure de la tablette, c'est-à-dire sur une partie de la surface supérieure, ou dessus, de la tablette, notamment lorsque celle-ci est en position d'utilisation ou en position de lecture des données du document. Par exemple, le support peut être positionné ou configuré de manière à permettre d'y poser le document dessus, lorsque l'écran est positionné sensiblement verticalement face à l'utilisateur, par exemple peut être positionné sur un chant supérieur de la tablette.

Le support et le module de lecture peuvent être positionnés sur un chant supérieur de la tablette, c'est-à-dire sensiblement entre la face avant et la face arrière de la tablette. Une telle configuration permet notamment de faciliter et d'améliorer la mise en place du document sur le support, puisque le poids du document sur le support va naturellement conduire à le maintenir sur son support. Par ailleurs, une telle configuration permet également à un agent de contrôle aux frontières de visualiser la bonne utilisation de la tablette par le passager, en regardant simplement le haut de la tablette lors des opérations d'acquisition et/ou contrôle effectuées par le passager, notamment à travers le parebrise du véhicule ou bien à l'intérieur du bâtiment.

Selon l'invention, le support présente une surface supérieure en V inversé, notamment destinée à supporter un document sous forme de livret, à l'état ouvert. Un des deux lecteurs du module de lecture de données documentaires est monté à proximité d'une branche du V inversé de la surface supérieure, et l'autre lecteur du module de lecture de données documentaires est monté à proximité de l'autre branche du V inversé de la surface supérieure.

La forme du support est choisie de manière à correspondre à celle d'un passeport ouvert à la page d'identification : ainsi, une fois le passeport ouvert à la page d'identification, il présente une forme qui viendra se positionner parfaitement sur la forme complémentaire en V inversé du support. La tablette facilite donc le positionnement correct du passeport ouvert sur le support, tout en permettant également un maintien amélioré du passeport sur le support. Ainsi, pour permettre à la tablette de lire toutes les informations contenues dans le passeport, il suffit juste au passager de positionner le passeport ouvert sur le support. En particulier, il n'y a pas deux manipulations à faire de la part du passager pour lire d'une part la piste MRZ et d'autre part la puce électronique, mais une seule uniquement.

Dit autrement, le support présente une surface supérieure en V inversé configurée pour supporter un document sous forme de livret, à l'état ouvert, posé immobile dessus. En particulier, dans le cas d'un passeport, l'ouverture de celui-ci pour accéder aux informations conduit à avoir la piste MRZ du côté de la couverture avant, et la puce électronique du côté de la couverture arrière. Le positionnement du passeport ouvert sur le support permet donc à chaque lecteur de lire les données du passeport correspondantes.

Préférentiellement, le support présente une surface supérieure en V inversé, avec la pointe du V orientée vers le haut lorsque la tablette est en position d'utilisation ou en position de lecture des données du document. Par exemple, la pointe du V peut être positionnée au niveau d'un chant supérieur de la tablette.

Préférentiellement, la tablette d'acquisition comporte également au moins une poignée de préhension, de préférence deux poignées de préhension situées sur deux bords latéraux opposés de la tablette, ladite au moins une poignée présentant une surface de préhension configurée pour limiter un mouvement de glissement dans la main de l'utilisateur.

Les poignées de préhension sont configurées pour faciliter l'usage de la tablette par l'utilisateur, notamment sa saisie, par exemple sur une borne adjacente à son véhicule, ou encore sa tenue lors des étapes d'acquisition et/ou contrôle des données documentaires. En effet, lors des telles étapes, l'utilisateur peut être amené à utiliser une de ses mains pour manipuler lesdits documents, ou bien pour interagir avec la tablette, ce qui conduit à tenir la tablette avec une seule main et donc à un risque de glissement de la tablette dans la main de l'utilisateur, par exemple par pivotement. Les poignées sont ainsi configurées pour limiter de tels mouvements non-voulus.

Préférentiellement, ladite au moins une poignée présente une surface de préhension de forme cylindrique avec un méplat, par exemple latéral.

La surface cylindrique permet une préhension confortable pour l'utilisateur, tout en facilitant également le nettoyage des poignées grâce à l'absence d'aspérités. Cependant, afin de limiter les risques de glissement de la tablette entre les mains de l'utilisateur, et notamment les risques de rotation de la poignée dans la main de l'utilisateur lorsque celui-ci la tient d'une seule main, un méplat est prévu dans la poignée, de préférence du côté latéral. Le méplat permet de créer une rupture dans la surface arrondie de la poignée, facilitant ainsi sa non-rotation dans la main de l'utilisateur.

Préférentiellement, la tablette d'acquisition comporte une surface externe arrondie et brillante.

La surface arrondie et brillante est choisie afin d'en faciliter le nettoyage et notamment la désinfection. Ainsi, la surface brillante traduit une surface lisse limitant l'accroche de saletés et autres à sa surface. De plus, une surface arrondie et brillante permet également un nettoyage facilité par UV pour la désinfection.

Préférentiellement, la tablette d'acquisition comporte également un module de recharge, le module de recharge comportant au moins trois connecteurs électriques, positionnés symétriquement par rapport à un plan de symétrie du contour de la tablette, et configurés pour se connecter à deux connecteurs externes de recharge quel que soit le sens de positionnement de la tablette par rapport aux deux connecteurs externes.

La tablette est destinée à être prise par l'utilisateur depuis une installation ou un support, et est repositionnée dans ladite installation ou sur ledit support par l'utilisateur, après acquisition et/ou contrôle des données documentaires. Ainsi, et afin de s'assurer que le repositionnement de la tablette permettra bien de reconnecter les connecteurs électriques de celles-ci avec ceux de recharge situés sur l'installation ou le support, la tablette comporte plusieurs connecteurs disposés de manière symétrique. Une telle configuration permet alors une connexion électrique entre l'installation ou le support et la tablette, quelle que soit l'orientation de celle-ci, tout en respectant la polarité des contacts électriques : il y aura toujours au moins deux connecteurs électriques en contact avec deux connecteurs de recharge de l'installation ou du support.

Préférentiellement, la tablette d'acquisition comporte également un lecteur biométrique, notamment pour la lecture d'empreintes digitales, par exemple un lecteur à quatre empreintes digitales, et/ou une caméra, notamment pour reconnaissance biométrique faciale.

Préférentiellement, la tablette d'acquisition comporte un corps avec au moins une partie formant ledit support, et dans lequel sont montés ledit écran et ledit module de lecture de données documentaires.

Le corps forme ainsi une coque dans laquelle sont intégrés les différents composants électroniques de la tablette, notamment l'écran, l'électronique de contrôle, les lecteurs, etc. Le corps, qui comporte notamment les poignées et le support, permet donc d'agencer les différents composants afin de rendre l'usage de la tablette simple et intuitif pour le passager.

### Brève description des dessins

[Fig. 1] La figure 1 représente une vue en perspective, de face, d'une tablette selon l'invention ; et
[Fig. 2] La figure 2 représente une vue en perspective, de derrière, de la tablette de la figure 1.

### Description des modes de réalisation

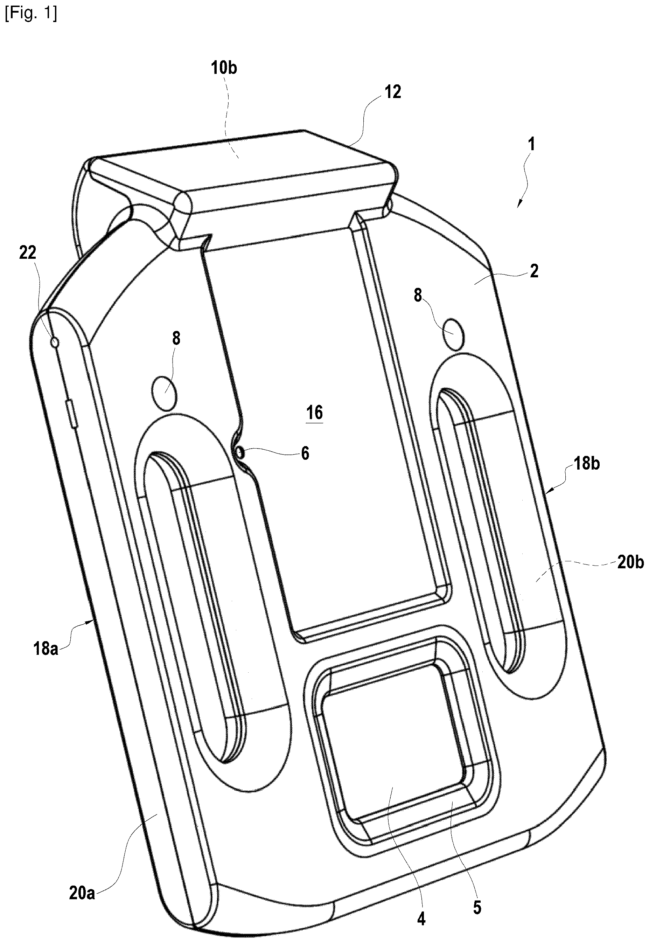

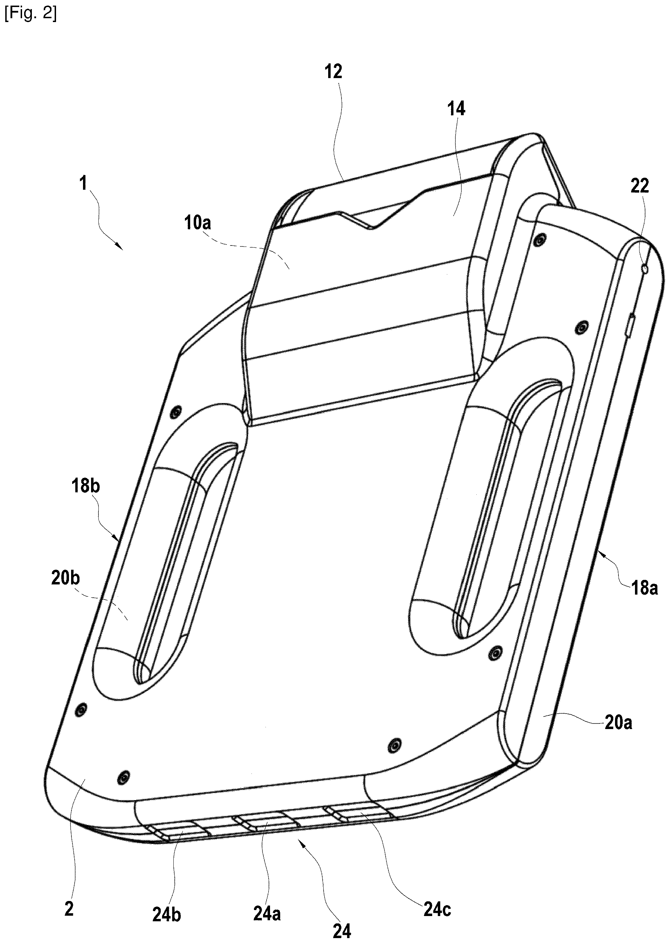

Les figures 1 et 2 illustrent deux vues en perspective, avant et arrière, d'un exemple de mode de réalisation d'une tablette 1 selon l'invention.

La tablette 1 est destinée à permettre l'acquisition, par exemple la lecture, de données documentaires telles que des données d'un passeport, d'une carte d'identité, ou de tout autre document officiel ou non, ou bien à permettre le contrôle de telles données documentaires pour vérifier qu'elles concordent avec des données déjà enregistrées par exemple. La tablette 1 peut également être configurée pour acquérir d'autres données, notamment biométriques telles que des empreintes ou une photo, afin de les enregistrer ou bien les comparer avec celles contenues dans les données documentaires.

A cet effet, la tablette 1 comporte un corps principal 2 et différents modules de lecture configurés pour lire différentes données, montés dans ledit corps 2. Le corps 2 est notamment choisi avec une surface externe lisse et brillante, et présentant des arêtes arrondies, de manière à en permettre un nettoyage et une désinfection facilités et efficaces, par exemple par exposition à des UV, et de manière à limiter les zones au niveau desquelles des microorganismes ou des saletés pourraient s'accumuler.

Ainsi, la tablette 1 peut comporter un lecteur biométrique 4 pour la lecture des empreintes digitales, par exemple un lecteur quatre empreintes. Un contour conducteur 5 peut notamment être prévu dans le corps 2, autour du lecteur biométrique 4, afin de permettre le fonctionnement du lecteur biométrique 4 le cas échéant. La tablette 1 peut également comporter une caméra 6, avec deux lampes 8, de type flash, disposées de part et d'autre de la tablette 1, afin de faciliter la prise de vue. La tablette 1 comprend également un double lecteur de données, par exemple un lecteur optique 10a et un lecteur RFID 10b, monté à l'intérieur d'un support 12. Dans l'exemple illustré aux figures 1 et 2, le support 12 est formé par le corps 2.

Le double lecteur de données et le support 12 du présent mode de réalisation sont notamment conçus pour lire des données contenues dans un passeport disposé sur ledit support 12. La lecture des différentes données du passeport présent sur le support 12 peut s'effectuer de manière simultanée, ou bien successivement sans nécessiter d'intervention de l'utilisateur entre les deux. Dit autrement, l'utilisateur met, c'est-à-dire pose, le passeport sur le support 12, et le double lecteur de données effectue la lecture des différentes données du passeport.

Ainsi, le double lecteur de données comprend d'une part le lecteur optique 10a, monté sur la partie arrière du corps 2 de la tablette 1 et configuré pour lire la bande MRZ ou le code-barres du passeport, et d'autre le lecteur RFID 10b, monté sur la partie avant du corps 2 de la tablette 1 et configuré pour lire les données de la puce électronique contenue dans le passeport.

Afin de positionner correctement le passeport par rapport aux lecteurs 10a, 10b, le support 12, sous lequel sont montés les lecteurs 10a et 10b, comprend une surface exposée, de préférence supérieure, configurée pour faciliter le bon positionnement et le maintien du passeport en place, en regard desdits lecteurs 10a, 10b.

Ainsi, le support 12 peut présenter une surface supérieure en V inversé. Une telle forme est particulièrement adaptée pour le positionnement et le maintien de documents sous forme de livret : le livret, à l'état ouvert, présente alors une forme complémentaire à celle du support 12. Chaque branche du V inversé peut alors comporter un des deux lecteurs 10a, 10b du double lecteur, afin de permettre la lecture de données sur chaque partie du livret ouvert.

La surface supérieure en V inversé du support 12 forme notamment une partie d'une surface supérieure du corps principal 2. En particulier, la tablette est configurée pour que la pointe du V inversé du support 12 soit orientée vers le haut lorsque la tablette 1 est en condition d'utilisation ou bien en condition de lecture des données d'un document. Par exemple, la pointe du V inversé du support 12 peut être positionnée sur un chant supérieur du corps principal 2. On s'assure ainsi que le document peut tenir immobile sur le support 12, sans avoir à être tenu pendant la lecture des données qu'il contient.

Par exemple, dans le cas d'un passeport, lorsque celui-ci est ouvert à la page comportant la bande MRZ, le côté avec la bande MRZ est positionné sur la partie arrière du support 12, là où se trouve le lecteur optique 10a, ce qui conduira à positionner l'autre côté du passeport, avec la puce électronique, sur la partie avant du support 12, là où se trouve le lecteur RFID 10b. L'utilisateur n'a donc qu'à ouvrir et poser le passeport sur le support 12 pour en permettre la lecture des données par le double lecteur, et n'a donc pas besoin de positionner le passeport d'une part par rapport à un lecteur optique et d'autre part par un lecteur RFID.

Le lecteur RFID 10b est positionné du côté avant de la tablette 1, sous la branche avant du V inversé du support 12. La lecture de la puce RFID se faisant sans contact, la surface avant du support 12 peut être lisse.

Le lecteur optique 10a est positionné du côté arrière de la tablette 1, sous la branche arrière du V inversé du support 12. Le lecteur optique 10a comporte notamment une fenêtre (non représentée) permettant la lecture de la bande MRZ ou du code-barres. En particulier, dans le cas présent, le document étant destiné à rester statique pendant la lecture de la bande MRZ ou du code-barres par le lecteur optique 10a, ce dernier doit donc comporter une fenêtre de longueur au moins égale à celle de la bande MRZ ou du code-barres.

Afin d'éviter les salissures et les poussières sur la fenêtre du lecteur optique 10a, ce qui pourrait compromettre la lecture correcte des données, le corps 2 comporte également un capot 14 arrière, monté fixe ou amovible sur le reste du corps 2, recouvrant au moins en partie le lecteur optique 10a et la partie correspondante de la branche en V inversée du support 12. Le capot 14 sert ainsi de protection à la fenêtre par laquelle le lecteur optique 10a peut lire les données des pistes MRZ ou code- barres. Ainsi, pour permettre la lecture de la bande MRZ, l'utilisateur positionne la page, ou la partie de livret, avec la bande MRZ dans la fente formée par la branche arrière du V inversé du support 12 et le capot 14, et l'autre page, ou l'autre partie du livret, sur la branche avant du V inversé du support 12. La fente formée par le support 12 et le capot 14 permet également d'éviter un glissement latéral du document le long de la direction longitudinale de la surface en V inversée, grâce aux bords de la fente qui viennent former des butées de retenue latérale pour le document.

Ainsi positionné, le document peut tenir seul sur le support 12 tout en étant lu à la fois par le lecteur optique 10a et le lecteur RFID 10b.

Afin de faciliter le maintien du document sur le support 12, le support 12 est positionné sur le dessus de la tablette 1 lorsque celle-ci est utilisée par l'utilisateur. Dit autrement, en utilisation, le support 12, et notamment la pointe du V inversé, va être orienté vers le haut, ce qui permettra d'y poser simplement le document dessus, sans avoir à tenir le document. Une telle disposition du support 12 peut également permettre une vérification visuelle, par un agent, de l'utilisation correcte de la tablette 1 par l'utilisateur. En effet, il suffit à l'agent de regarder le haut de la tablette 1, par exemple à travers le parebrise du véhicule de l'utilisateur ou bien à l'intérieur du bâtiment, pour s'assurer que celui-ci a bien positionné son document sur le support 12.

La tablette 1 peut également comprendre un écran 16, d'informations ou de saisie pour l'utilisateur. L'écran 16 peut avantageusement être tactile pour faciliter la saisie d'informations par l'utilisateur. L'écran 16 est orienté de préférence en mode portrait, c'est-à-dire avec sa plus grande longueur orientée verticalement lorsque l'utilisateur positionne la tablette 1 debout face à lui. Dans ce cas, on comprend donc que le support 12 est disposé au-dessus de l'écran 16.

La tablette 1 comporte également un module de communication sans fil (non représenté), par exemple un émetteur wifi ou Bluetooth, pour permettre une communication avec un ordinateur ou un serveur distant.

La tablette 1 comprend également deux poignées 18a, 18b de préhension latérales, formées par le corps 2. Les poignées 18a, 18b sont disposées latéralement de part et d'autre de l'écran 16, c'est-à-dire sur des bords latéraux opposés de la tablette 1. Les poignées 18a, 18b sont de forme arrondie et lisse, comme le reste du corps 2, afin d'en permettre un nettoyage et une désinfection efficace. Plus particulièrement, les poignées 18a et 18b peuvent présenter une forme générale cylindrique s'étendant selon la grande longueur de l'écran, afin d'apporter un confort de préhension lors de l'utilisation. Toutefois, et afin d'éviter tout glissement de la poignée dans la main, notamment lorsque l'utilisateur tient la tablette 1 d'une seule main, des méplats 20a, 20b sont également prévus, par exemple sur le rebord latéral extérieur des poignées 18a, 18b, afin de faciliter leur bonne préhension.

Afin de permettre un allumage ou une extinction du dispositif électronique monté dans le corps 2, ce dernier peut comporter une ouverture 22 réduite par laquelle un outil longitudinal peut être introduit pour actionner un bouton ON/OFF du dispositif électronique monté dans le corps 2. Un tel agencement permet notamment d'éviter un tel actionnement par l'utilisateur, même par inadvertance, tout en permettant d'éteindre et d'allumer la tablette 1 sans avoir à ouvrir le corps 2.

Enfin, la tablette 1 comporte également un module de recharge 24 permettant de connecter la tablette 1 à une source électrique externe afin de recharger la batterie de la tablette 1. Le module de recharge 24 comporte avantageusement trois connecteurs électriques 24a, 24b et 24c destinés à venir se connecter à deux bornes de recharge. Afin de s'assurer que les pôles des connecteurs électriques de la tablette 1 soient en toutes circonstances, reliés aux mêmes pôles des bornes de recharge, les connecteurs électriques 24a, 24b, 24c sont disposés symétriquement sur le corps 2 de la tablette 1, avec un connecteur électrique 24a dans le plan de symétrie de la tablette 1, de manière à être toujours connecté à la même borne de recharge, quelle que soit l'orientation de la tablette 1 lors de son rangement par l'utilisateur, et deux connecteurs électriques 24b, 24c montés symétriquement par rapport au connecteur électrique 24a, de manière à ce qu'il y ait toujours un des deux connecteurs 24b, 24c qui soit relié à l'autre borne de recharge, en fonction du sens de rangement de la tablette par l'utilisateur. On s'assure ainsi simplement du bon branchement du module de recharge 24 de la tablette 1 sur les bornes de recharge, quel que soit le sens de positionnement de la tablette sur lesdites bornes de recharge.

Ainsi, grâce à la tablette selon la présente invention, il devient plus rapide et plus intuitif pour les passagers d'effectuer les démarches d'acquisition et/ou de contrôle de leurs données documentaires. En particulier, la géométrie de la tablette, et notamment la forme de son support supérieur dans lequel sont intégrés deux lecteurs différents, permet d'effectuer plusieurs vérifications simultanées ou successives sans intervention du passager. Il devient alors plus facile pour les passagers d'effectuer de telles démarches eux-mêmes, sans avoir à requérir la présence ou l'assistance d'un membre du personnel qualifié.

## Revendications

1. Tablette (1) d'acquisition et/ou de contrôle de données documentaires, notamment à bord d'un véhicule ou à l'intérieur d'un bâtiment, comportant au moins un écran (16), par exemple orienté verticalement, un support (12) et un module de lecture de données documentaires, dans laquelle le module de lecture de données documentaires comporte deux lecteurs (10a, 10b) différents, dans laquelle le module de lecture de données documentaires est configuré pour acquérir différentes données d'un document disposé sur le support (12), avec les deux lecteurs différents (10a, 10b), **caractérisée en ce que** le support (12) présente une surface supérieure en V inversé et dans laquelle un (10a) des deux lecteurs du module de lecture de données documentaires est monté à proximité d'une branche du V inversé de la surface supérieure, et l'autre lecteur (10b) du module de lecture de données documentaires est monté à proximité de l'autre branche du V inversé de la surface supérieure.

2. Tablette (1) d'acquisition selon la revendication 1, dans laquelle le module de lecture comporte un lecteur optique (10a), par exemple pour lire une piste MRZ ou un code-barres, et un lecteur RFID (10b), par exemple pour lire une puce électronique.

3. Tablette (1) d'acquisition selon la revendication 2, dans laquelle le lecteur RFID (10b) est monté du même côté que l'écran (16) de la tablette (1), et dans laquelle le lecteur optique (10a) est monté du côté opposé à l'écran (16) de la tablette (1).

4. Tablette (1) d'acquisition selon l'une quelconque des revendications précédentes, dans laquelle le support (12) et le module de lecture de données documentaires sont positionnés au-dessus de l'écran (16), de préférence sur une partie supérieure de la tablette (1).

5. Tablette (1) d'acquisition selon l'une quelconque des revendications précédentes, dans laquelle la surface supérieure en V inversé est destinée à supporter un document sous forme de livret, à l'état ouvert.

6. Tablette (1) d'acquisition selon l'une quelconque des revendications précédentes, comportant également au moins une poignée de préhension (18a, 18b), de préférence deux poignées de préhension situées sur deux bords latéraux opposés de la tablette (1), ladite au moins une poignée présentant une surface de préhension configurée pour limiter un mouvement de glissement dans la main de l'utilisateur.

7. Tablette (1) d'acquisition selon la revendication précédente, dans laquelle ladite au moins une poignée (18a, 18b) présente une surface de préhension de forme cylindrique avec un méplat (20a, 20b), par exemple latéral.

8. Tablette (1) d'acquisition selon l'une quelconque des revendications précédentes, comportant une surface externe arrondie et brillante.

9. Tablette (1) d'acquisition selon l'une quelconque des revendications précédentes, comportant également un module de recharge (24), le module de recharge comportant au moins trois connecteurs électriques (24a, 24b, 24c), positionnés symétriquement par rapport à un plan de symétrie du contour de la tablette (1), et configurés pour se connecter à deux connecteurs externes de recharge quel que soit le sens de positionnement de la tablette (1) par rapport aux deux connecteurs externes.

10. Tablette (1) d'acquisition selon l'une quelconque des revendications précédentes, comportant également un lecteur biométrique (4) et/ou une caméra (6).

11. Tablette (1) d'acquisition selon l'une quelconque des revendications précédentes, comportant un corps (2) avec au moins une partie formant ledit support (12), et dans lequel sont montés ledit écran (16) et ledit module de lecture de données documentaires.

## Patentansprüche

1. Tablet (1) zur Erfassung und/oder Kontrolle von Dokumentendaten, insbesondere an Bord eines Fahrzeugs oder im Inneren eines Gebäudes, mit mindestens einem, beispielsweise vertikal ausgerichteten, Bildschirm (16), einem Halter (12) und einem Dokumentendaten-Lesemodul, wobei das Dokumentendaten-Lesemodul zwei unterschiedliche Lesegeräte (10a, 10b) aufweist, und wobei das Dokumentendaten-Lesemodul ausgebildet ist, um mit den beiden unterschiedlichen Lesegeräten (10a, 10b) unterschiedliche Daten eines auf dem Halter (12) angeordneten Dokuments zu erfassen, **dadurch gekennzeichnet, dass** der Halter (12) eine obere Fläche in Form eines umgekehrten V aufweist und wobei eins (10a) der beiden Dokumentendaten-Lesegeräte in der Nähe eines Schenkels des umgekehrten V der oberen Fläche angebracht ist und das andere Lesegerät (10b) des Dokumentendaten-Lesemoduls in der Nähe des anderen Schenkels des umgekehrten V der oberen Fläche angebracht ist.

2. Erfassungstablet (1) nach Anspruch 1, wobei das Lesemodul ein optisches Lesegerät (10a) aufweist, beispielsweise zum Lesen einer MRZ-Spur oder eines Strichcodes, und ein RFID-Lesegerät (10b), beispielsweise zum Lesen eines Mikrochips.

3. Erfassungstablet (1) nach Anspruch 2, wobei das RFID-Lesegerät (10b) auf derselben Seite wie der Bildschirm (16) des Tablets (1) angebracht ist, und wobei das optische Lesegerät (10a) auf der dem Bildschirm (16) des Tablets (1) gegenüberliegenden Seite angebracht ist.

4. Erfassungstablet (1) nach einem der vorhergehenden Ansprüche, wobei der Halter (12) und das Dokumentendaten-Lesemodul über dem Bildschirm (16), vorzugsweise an einem oberen Teil des Tablets (1), positioniert sind.

5. Erfassungstablet (1) nach einem der vorhergehenden Ansprüche, wobei die obere Fläche in Form eines umgekehrten V bestimmt ist, ein Dokument in Form eines Hefts in aufgeschlagenem Zustand zu halten.

6. Erfassungstablet (1) nach einem der vorhergehenden Ansprüche, das ebenfalls mindestens einen Griff (18a, 18b) umfasst, vorzugsweise zwei Griffe, die sich an zwei gegenüberliegenden Seitenkanten des Tablets (1) befinden, wobei der mindestens eine Griff eine Greiffläche aufweist, die ausgelegt ist, um eine Gleitbewegung in der Hand des Benutzers zu begrenzen.

7. Erfassungstablet (1) nach vorhergehendem Anspruch, wobei der mindestens eine Griff (18a, 18b) eine zylindrische Greiffläche mit einer Abflachung (20a, 20b), beispielsweise seitlich, aufweist.

8. Erfassungstablet (1) nach einem der vorhergehenden Ansprüche, das eine abgerundete und glänzende Außenfläche aufweist.

9. Erfassungstablet (1) nach einem der vorhergehenden Ansprüche, das ebenfalls ein Lademodul (24) aufweist, wobei das Lademodul mindestens drei elektrische Verbinder (24a, 24b, 24c) aufweist, die symmetrisch in Bezug auf eine Symmetrieebene der Kontur des Tablets (1) positioniert und ausgelegt sind, um sich unabhängig von der Positionierungsrichtung des Tablets (1) in Bezug auf die beiden externen Verbinder mit zwei externen Ladeverbindern zu verbinden.

10. Erfassungstablet (1) nach einem der vorhergehenden Ansprüche, das ebenfalls ein biometrisches Lesegerät (4) und/oder eine Kamera (6) aufweist.

11. Erfassungstablet (1) nach einem der vorhergehenden Ansprüche mit einem Körper (2) mit mindestens einem Teil, der den Halter (12) bildet, und in dem der Bildschirm (16) und das Dokumentendaten-Lesemodul angebracht sind.

## Claims

1. A tablet (1) for the acquisition and/or checking of documentary data, in particular on board a vehicle or inside a building, including at least one screen (16), e.g. vertically oriented, a support (12) and a module for reading documentary data, wherein the module for reading documentary data includes two different readers (10a, 10b), a module for reading documentary data configured for acquiring different data from a document arranged on the support (12), with two different readers (10a, 10b), **characterized in that** the support (12) has an upper surface with an inverted V shape wherein one (10a) of the two readers of the module for reading documentary data is mounted near a branch of the inverted V of the upper surface, and the other reader (10b) of the module for reading documentary data is mounted near the other branch of the inverted V of the upper surface.

2. The acquisition tablet (1) according to claim 1, wherein the reading module includes an optical reader (10a), e.g. for reading an MRZ track or a bar code, and an RFID reader (10b), e.g. for reading an electronic chip.

3. The acquisition tablet (1) according to claim 2, wherein the RFID reader (10b) is mounted on the same side as the screen (16) of the tablet (1), and wherein the optical reader (10a) is mounted on the opposite side to the screen (16) of the tablet (1).

4. The acquisition tablet (1) according to any of the preceding claims, wherein the support (12) and the module for reading documentary data are positioned above the screen (16), preferably on an upper portion of the tablet (1).

5. The acquisition tablet (1) according to any of the preceding claims, wherein the inverted V-shaped upper surface is intended to support a document in the form of a booklet, in the open state.

6. The acquisition tablet (1) according to any of the preceding claims, further including at least one gripping handle (18a, 18b), preferably two gripping handles located on two opposite lateral edges of the tablet (1), said at least one handle having a gripping surface configured to limit a sliding movement in the user's hand.

7. The acquisition tablet (1) according to the preceding claim, wherein said at least one handle (18a, 18b) has a gripping surface with a cylindrical shape with a flat (20a, 20b), e.g. lateral.

8. The acquisition tablet (1) according to any of the preceding claims, including a rounded glossy external surface.

9. The acquisition tablet (1) according to any of the preceding claims, further including a charging module (24), the charging module including at least three electrical connectors (24a, 24b, 24c), positioned symmetrically with respect to a plane of symmetry of the outline of the tablet (1), and configured to connect to two external charging connectors whatever the direction of positioning of the tablet (1) with respect to the two external connectors.

10. The acquisition tablet (1) according to any of the preceding claims, further including a biometric reader (4) and/or a camera (6).

11. The acquisition tablet (1) according to any preceding claim, including a body (2) with at least a portion forming said support (12), and wherein said screen (16) and said reading module for documentary data, are mounted.
